# EUROPEAN PATENT APPLICATION

(11) **EP 2 821 932 A1**
(43) Date of publication of application: **07.01.2015**
(21) Application number: 14175579.3
(22) Date of filing: 03.07.2014
(51) Int. Cl.: G06F 21/62

(54) **Computer-implemented method and system for controlling access for a tag reader to an information page on a server system**

(30) Priority: 04.07.2013 NL 2011097
(71) Applicant: Oxhale Holding B.V., 6811 DG Arnhem (NL)
(72) Inventor: Milder, Roy, 6666 MR Heteren (NL)
(74) Representative: van Looijengoed, Ferry Antoin Theodorus

(57) **Abstract**

A computer-implemented method and server system for controlling access to an information page for a tag reader. The information page is associated with a tag and identified by a first information page identifier for accessing the information page via the server system. A first verification code is pre-stored in the server system in association with the first information page identifier. The tag is provisioned with a second information page identifier and a second verification code. The server system receives a request for the information page from the tag reader. The request contains the second information page identifier and the second verification code read by the tag reader from the tag. The server system verifies whether the second verification code from the tag matches the first verification code that is available to the server system. Access is provided to the information page identified by the first information page identifier only when the second verification code matches the first verification code associated with the first page identifier, provided that the second information page identifier matches the first information page identifier.

## Description

### FIELD OF THE INVENTION

The present disclosure relates to a computer-implemented method and system for controlling access to an information page for a tag reader. The disclosure also relates to controlling the content of the information page once access is provided.

### BACKGROUND

Product purchasing, product maintenance, product servicing, service provisioning etc. are examples of activities wherein more information on e.g. the product or service may lead to better results. For example, car servicing may benefit from information on previous servicing activities for a particular car. Medical information about a person may improve treatment of or service to the person. It is therefore useful to disclose information related to an object, product or service.

The information may be provided with the product or object, e.g. as a hardcopy manual or as a computer-readable medium such as a disc. However, over the past decade, it has become commonplace that the information is stored on a computer system and is made accessible to a user, using a device, over a network.

US 2013/013421 discloses a system and method of associating an NFC tag to a product and transmitting information about the product. An electronic device is used to scan a generic NFC tag affixed to a product to obtain a unique ID code as well as other indicia identifying the product itself, such as a bar code. The unique ID and bar code are then transmitted to a central server, where they are associated with one another and stored in a database. Once associated, a customer may use a separate electronic device, such as a mobile phone or tablet computer, to scan a product of interest, transmit the unique ID code to the central server, and retrieve from the central server information about the product.

A similar application is disclosed in the publication "Near Field Communication" in IEEE Pervasive Computing; ISSN 1536-1268 by R. Want, wherein the author describes automatically associating an object, person or place with online documentation or web content. The reference to the Internet resource may be provided as an optical tag (e.g. a QR code) or as an RFID tag. An RFID tag may be read using NFC, wherein NFC data is transferred using an NFC Data Exchange Format (NDEF). One record type definition in NDEF is the unique resource identifier (URI), wherein textual URIs (e.g. http://www.,")are encoded in a record. An application, such as a web browser, receiving such an NEDF record may process this URI.

As mentioned by the author, NFC methods raise security concerns with the public for certain applications, such as financial transactions.

Indeed, whereas for many products and services, information associated with the product or service may be non-confidential, information on other objects, products or services may be confidential. A common approach to protect such information from arbitrary disclosure is to secure such information by means of a personal login operation, e.g. using a password. However, such a login operation may be troublesome in some cases, e.g. when a user does not possess the login information and quick access to the information is desired. Such a case may e.g. occur when a doctor needs information relating to a person's health condition and the person itself is not able to provide the login details.

### SUMMARY

The present disclosure discloses a method and system for access control to information, wherein information can be maintained confidential but still is easily accessible to users requiring the information.

One aspect of the disclosure pertains to a computer-implemented method for controlling access to an information page for a tag reader. The information page is associated with a tag and identified by a first information page identifier for accessing the information page via the server system. A first verification code is pre-stored in the server system in association with the first information page identifier. The tag is provisioned with a second information page identifier and a second verification code.

The server system receives a request for the information page from the tag reader. The request contains the second information page identifier and the second verification code read by the tag reader from the tag.

The server system verifies whether the second verification code from the tag matches the first verification code that is available to the server system. Access is provided to the information page identified by the first information page identifier only when the second verification code matches the first verification code associated with the first page identifier, provided that the second information page identifier matches the first information page identifier.

Another aspect of the disclosure relates to a method for accessing an information page from a server system using a tag reader, the server system having a pre-stored first verification code associated with a first information page identifier for accessing the information page. A tag is read to retrieve a second information page identifier and a second verification code stored in the tag. The read second information page identifier and second verification code are transmitted to the server system. The information page, identified by the first information page identifier is accessed by the tag reader when the second information page identifier matches the first page identifier and only when the second verification code matches the first verification code associated with the first page identifier.

Yet another aspect of the disclosure relates to a computer program containing software code portions configured, when executed on a server system, performing the access control method disclosed herein. Also, a non-transitory, computer-readable storage medium having instructions for performing the access control method is disclosed.

Still further, a server system is disclosed that is configured for controlling access to an information page for a tag reader, the information page being associated with a tag and being identified by a first information page identifier for accessing the information page via the server system. The server system comprises a storage storing a first verification code in association with the first information page identifier. The server system also comprises processing means for controlling access to the information page associated with the tag, the tag having stored a second information page identifier and a second verification code. The processing means is configured for, e.g. programmed for, processing a request for the information page from the tag reader reading the tag, the request containing the second information page identifier and the second verification code. The processing means is configured for verifying whether the second verification code from the tag matches the first verification code pre-stored in the server system. When the second information page identifier from the tag matches the first page identifier, access is provided, e.g. for the tag reader, to the information page identified by the first information page identifier only when the second verification code matches the first verification code associated with the first page identifier.

In the disclosed method and system, access control to the information page, identified by the first information page identifier in the server system, is obtained by a verification operation in the server system using the verification code stored in the tag. Only using the information page identifier that serves as an address (location) of the information page in the server system is insufficient for accessing the information page in the absence of the verification code associated with and e.g. stored in the server system. Since the combination of the information page identifier and the verification code is only stored in the tag, access to the information page can only be obtained by people in close proximity to the tag and in the possession of a tag reader.

The verification operation in the server system using the verification code enables the tag reader to access the information page by means of a general-purpose web browser. A dedicated application, often referred to as 'app', is not required for accessing and access control to the information. This is advantageous since the majority of mobile devices, provided with a tag reader, contains a general-purpose web browser. The disclosed method and system enable information page access using this web browser for tags of different sources and presentation of the information page in a web browser on e.g. the tag reader device. E.g. a car servicing company may service cars of many brands each providing their own privately labelled tags to their own drivers and accessing past services information for all cars using only the general web browser instead of using different apps for cars of the different brands.

It should be noted that the tag reader may be comprised in any electronic device, e.g. a portable electronic device. The second information page identifier may be a URL or a portion of a URL and may be transmitted in a http-request, optionally along with the second verification code. A URL (or URI) comprises various components as defined in the document RFC 3986 describing the generic syntax for URIs. Two components of the URI involve the authority and the path. The authority defines the address of the server system, whereas the path serves to identify (locate) a resource within the addressed server system. The authority and the path enable a web browser to access the information on the server system. The server system can only handle a request for information if the request is addressed to that server system, i.e. the authority should be the address of the server system. The server system uses the verification code to allow or block access to the information identified by the information page identifier (the path) in that server system.

The authority of the URL is normally used to resolve the IP address of the server system via which the information page can be obtained using a domain name service (DNS). It should also be noted that the tag may have stored the IP address of the server system directly so that DNS resolution of the IP address is not needed.

It should also be noted that communication between the tag reader and the tag may be in a format suitable for automatically launching a web browser session between the mobile device comprising the tag reader and the server system. Such a data format may e.g. comprise the NFC Data Exchange Format (NDEF).

In a disclosed embodiment, access to the information page is blocked after one or more erroneous verifications resulting from verifying a mismatch between the second verification code and the first verification code. Since reading and transmission of the second verification code is normally error-free, the threshold for blocking access may be set to only one attempt. In order to provide some leeway, a slightly higher number of erroneous attempts may be set, such as two, three or five. The owner of the information page, e.g. the user having entered the information in the information page may receive a notification message when access to the information page is blocked.

While the verification code serves as the primary safety mechanism for accessing the information page, some applications may benefit from further access barriers, such as an additional login operation using the tag reader after a match of the verification codes has been verified.

In a disclosed embodiment, the information page is a user-editable information page. A user may e.g. enter information on his personal health and condition on the page and provide access to the page with the tag he carries with him. A car servicing company may e.g. enter information regarding the servicing status of a car.

In a disclosed embodiment, the tag reader comprises a near-field communication reader (NFC reader) and the tag comprises an NFC tag. Examples of NFC readers are mobile devices provided with NFC readers, such as mobile phones. The information page may be shown in a web browser of the mobile device. An advantage of using NFC technology is that the information may only be read from the tag when the reader is in close proximity to the tag, e.g. a few centimetres, such that the information page can only be accessed when the reader is held to the tag at such a close distance. Other tag readers may be readers capable of reader QR codes.

The tag may be attached to or integrated in an object, such as a shoe or a car. Optionally, the object contains additional marks indicating the location of the tag in the object to enable persons to quickly locate and read the tag.

In an additional embodiment, an authorisation status of the device and/or tag reader in the server system determines the presented content of the information page identified by the second information page. Whereas access to the information page is determined by the matching of the verification codes, if access is provided, the content of the information page to which access is provided is controlled by the authorisation status in the server system of the device that reads the tag. Dependent on the authorisation status, first information (a first information set) or second information (a second information set) is provided. The first information set and the second information set are different information sets (but may partly overlap). It should be noted that more than two information sets may be used, e.g. a third information set or a fourth information set dependent on e.g. the authorisation status.

It is noted that the invention relates to all possible combinations of features recited in the claims.

### BRIEF DESCRIPTION OF THE DRAWINGS

Aspects of the invention will be explained in greater detail by reference to exemplary embodiments shown in the drawings, in which:
FIG. 1 is a schematic illustration of a server system in a network environment further comprising electronic devices and a mobile device comprising a tag reader;
FIG. 2 is a schematic illustration of components of the tag, the tag reader and the server system;
FIG. 3 is a flow chart of an embodiment of a method for controlling access to an information page;
FIGS. 4A and 4B illustrate some exemplary applications of the disclosed method and server system for controlling access to the information page;
FIG. 5 illustrates a further embodiment of the present invention applying an authorisation status for the mobile device in the server system to control the information on the information page; and
FIG. 6 is a schematic block diagram illustrating a general processing system for a server system or mobile device comprising a tag reader.

### DETAILED DESCRIPTION OF THE DRAWINGS

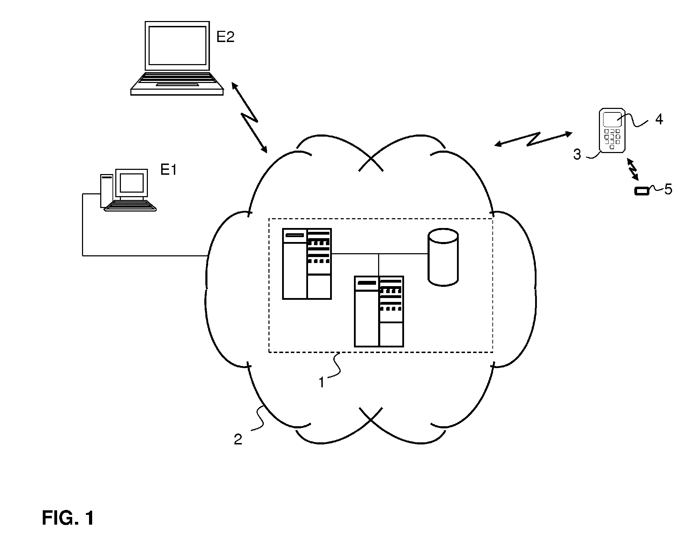

FIG. 1 is a schematic illustration of a server system 1 in a network 2, comprising e.g. the internet. Electronic devices E1, E2 are enabled to connect to the server system 1. A mobile device 3 comprising a display 4 is also enabled to connect to the server system 1. Mobile device 3 may e.g. comprise a smart phone containing a near-field communication reader (NFC reader) enabled to read data stored in an NFC tag 5.

It should be noted that FIG. 1 is a schematic view of an environment for operating the disclosed method and does not illustrate any further technical means, such as access networks and other network devices known to the skilled person for practical implementation of the method.

As illustrated in FIG. 1, server system 1 may comprise a plurality of devices, such as (web)servers and databases.

Electronic device E1, which is e.g. a personal computer, may be used by a person also e.g. owning or hiring tag 5 to create or edit an information page in server system 1. The information page may e.g. contain personal information, such as medical information of the person that intends to carry the tag 5 with him or her. The information page may also be created or edited by another party than the person intended to carry the tag 5 with him or her, e.g. a service provider, such as a car servicing party or a health care institute. The information page is intended to be accessed in a simple manner by a person reading the tag 5 using mobile device 3.

Tags 5 may be distributed by a party operating the server system 1 or by a third party. The tags 5 are provided with at least a server identifier such as e.g. a domain name in a URL (an authority), an information page identifier and a verification code.

In an aspect of the disclosed method and system, it is ensured that the information page is stored in the server system 1 under an information page identifier assigned to the information page. The information page identifier is part of a URL (the path) required for accessing the information page on the server system 1 over the network 2. To access the information page from the mobile device 3, it should be ensured that the information page identifier stored in the tag 5 corresponds to the information page identifier under which the information page is stored in the server system 1. The tag reader in mobile device 3 may then transmit the information page identifier to the server system 1 and access the information page. Hereto the server identifier is used to address the server system 1.

The means for getting access to the information page typically comprises the server identifier (authority) and the information page identifier (the path), e.g. in the form of an URL wherein the domain name is followed by the information page identifier. The information page identifier thus serves as a part of the URL for getting access to the information page. A malicious user operating electronic device E2 in FIG. 1 may then try to access the information page by addressing server system 1 by e.g. firing many information page identifiers to the server system 1 running a script generating such URLs. The malicious user may then access information pages for which the script has generated existing information page identifiers in the server system. Since the information page may contain personal and sensitive information, it is self-evident that such hacking attempts should be discouraged.

To that end, the disclosed method and system apply a verification code stored in both the server system 1 and in the tag 5. The verification code is stored in the server system 1 in association with the information page identifier for accessing the information page. Only when the verification code from the tag 5, or a derivative thereof, corresponds to the verification code, or a corresponding derivative thereof, stored in the server system 1, access to the information page identified by the information page identifier is provided. Such access may be provided as a web page to the mobile device 3.

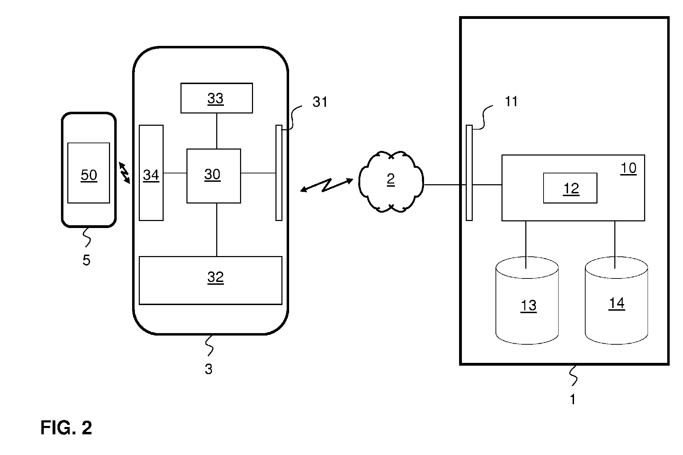

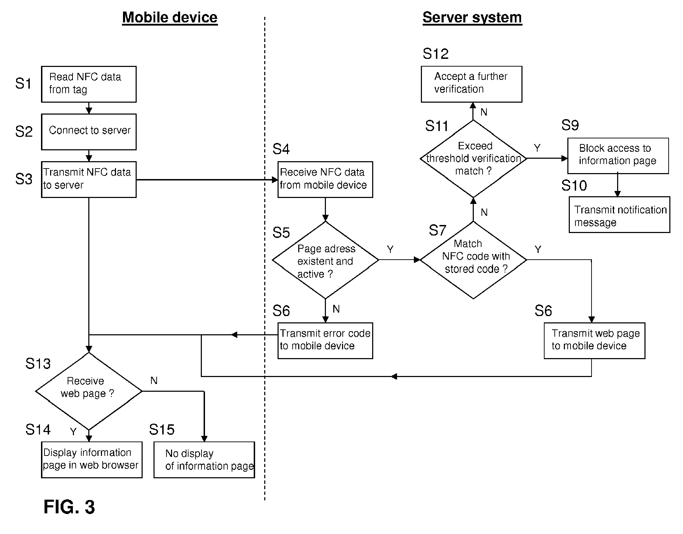

The method and system will be described in further detail with reference to FIGS. 2 and 3.

FIG. 2 is a schematic illustration of a tag 5, an electronic device 3 and a server system 1.

Server system 1 comprises a processor 10 and a network interface 11 over which server system 1 can be accessed using network 2. Processor 10 may comprise a verification module 12 for matching verification codes.

Server system 1 has access to storage means, e.g. one or more databases 13, 14 storing information relevant for operating the system 1. Database 13 may e.g. contain information pages stored under corresponding first information page identifiers, i.e. the first information page identifiers serve as keys to retrieve the information pages from the database 13. Database 14 may store first verification codes in association with first information page identifiers. Again, a first information page identifier may serve as a key to retrieve a corresponding first verification code from the database 14. Obviously, databases 13 and 14 may be combined. Databases 13, 14 may be located separate from the server itself and be accessible in the network 2.

Mobile device 3 comprises a processor 30, a network interface 31, storage 32 and a display driver 33. In addition, mobile device 3 also comprises an NFC reader 34 configured for reading NFC tag 5 in a manner known as such to the skilled person. Storage 32 stores a general-purpose browser, such as Internet Explorer^{®}, Safari^{®}, FireFox^{®}, Chrome^{®} etc. that can be run on processor 30 for displaying the information pages received from server system 1 on display 4 (not shown in FIG. 2) using display driver 33.

Tag 5 comprises an NFC tag having storage 50 for storing a second information page identifier and a second verification code. In addition, storage 50 stores a server identifier in the form of a URL or IP address of the server system 1. The tag 5 is a simple, thin device containing an antenna and a small amount of memory. It is a passive device, powered by a magnetic field. Depending on the tag type, the memory can be read only/write once or rewritable. In the present disclosure, the tag 5 preferably is a read-only tag.

As mentioned above, tags 5 may be distributed containing this data and the corresponding first information page identifier and the corresponding first verification code data are then stored or activated in the server system 1 as well. In other words, the first information page identifier stored in the server system 1 is typically equal to but possibly a derivative of the second page identifier stored in the tag 5 and the first verification code stored in the server system 1 in association with the first information page identifier is typically equal to but possibly a derivative of the second verification code stored in the tag 5. Only then, the information page stored in the server system 1 may be accessed by a mobile device 3 capable of reading the tag 5.

Distribution of the tags 5 and linking the tags 5 to the server system 1 can be arranged in a variety of ways. In one embodiment, the tags are provided with a visible identifier that is also stored in the server system. The identifier is linked in the server system 1 to the first information page identifier and the first verification code, possibly in database 14. When the owner of a tag 5 accesses a general web page of e.g. server system 1 and enters the visible identifier, he may be enabled to create an information page associated with the tag. The information page may be accessible via the web via a login operation set up during a subscription process at a later stage. Alternatively, when the tag is scanned for a first time, the server system may detect that the received combination of the second information page identifier and the second verification code matches a combination of an active first information page identifier and a first verification code and, upon finding that the information page does not yet exists and/or that the combination is received for the first time, the server system 1 may enable creation of the information page.

FIG. 3 depicts a flow chart for an embodiment of operating the system of FIG. 2.

In step S1, the mobile device 3 is held in close proximity to the tag 5 to read NFC data from the tag 5 stored in storage 50. Tag reader 34 receives the address of server system 1 and the second information page identifier and second verification code from tag 5. An exemplary address may be http://www.domain.com. An exemplary information page identifier may comprise all types of characters, e.g. 1a2b3c4d5e6f7g8h9j0i identifying the information page stored in database 13 of the server system. The second information page identifier is a unique identifier in the server system 1. The second verification code may also contain all types of characters, e.g. z0y9x8w7v6u5t4s3r2q1. It should be noted that the verification codes do not need to be unique, but that the combination of the information page identifier and the verification code is unique.

In step S2, a connection is established with server system 1 over network 2. The connection may involve starting a web browser session with server system 1. The connection may be established automatically during reading the tag 5 as a result from e.g. the data format used in the NFC communication between the tag 5 and the tag reader 34. This data format may comprise the NFC Data Exchange Format.

In step S3, the NFC data is transmitted to the server system 1 over network 2, e.g. as an http request. An example of an http-request in this case is: http://www.domain.com?page_id =1a2b3c4d5e6f7g8h9j0i&verificationCode= z0y9x8w7v6u5t4s3r2q1.

In step S4, the http request is received at the server system and processor 10 determines in step S5 whether the second page identifier is an existing and active identifier. If not, there is no information page to be transmitted to the mobile device 3 and an error code is transmitted in step S6.

When the second page identifier is an existing and active page identifier, e.g. corresponding to the active and existing first page identifier, a verification code match determination is performed in step S7. Step S7 is performed by verification module 12 of processor 10. In this step, it is verified whether the second verification code received from the tag 5 matches with the first verification code stored in database 14 of server system 1 in association with the first information page identifier.

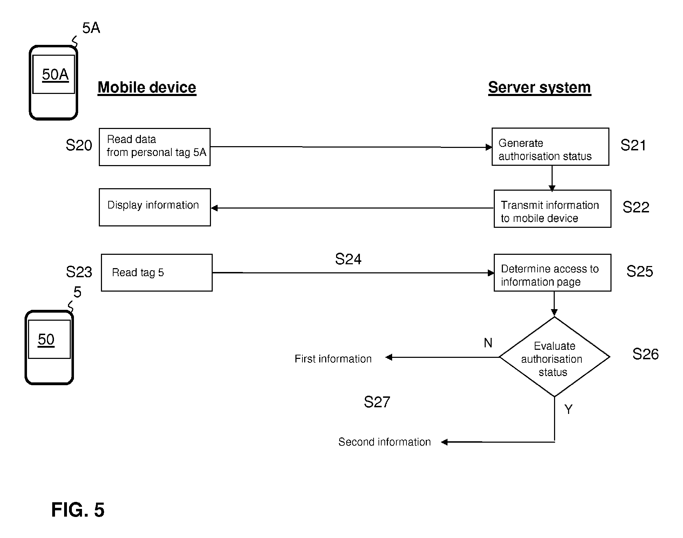

If the received second verification code matches the stored first verification code, a web page comprising the information page may be transmitted to or shown for the mobile device 3 in step S8. It should be noted that, in some cases, a further authentication may be performed before the web page can be accessed, such as a login procedure. This is not shown in FIG. 3. It should also be noted that in this stage, the server system 1 may determine the content of the information page stored under the information page identifier. At least one of a first and a second content set may be presented for the information page. One embodiment of enabling presenting different content will be described with reference to FIG. 5 below.

If it is found in step S7 that the received second verification code does not match the stored first identification code, access to the information page may be blocked at once (step S9). A notification message may be transmitted to a destination address of a user of the tag 5 that is preprogrammed in the server system 1 in association with the information page. The server system 1 may or may not notify the transmitter of the erroneous verification code that access to the information page cannot be granted.

In order to provide some leeway to errors, a threshold may be set on the number of verification operations S7 yielding erroneous results in step S11. The threshold, if not set to 1 in which case access to the information page is blocked (step S9), is a low number, e.g. 2, 3 or 5. If the threshold has not been exceeded an additional verification process S7 is accepted.

In step S13, the mobile device verifies whether it has received a webpage comprising the information page of step S8 (matching verification codes for the second page identifier) or an error code of step S6 (non-existing or non-active second information page identifier). If the web page with the information page is received, processor 30 triggers display driver 34 to display the information page on display 4 of mobile device 3, step S14. If not, the information page is not received or accessed by the mobile device and can thus not be displayed, step S15.

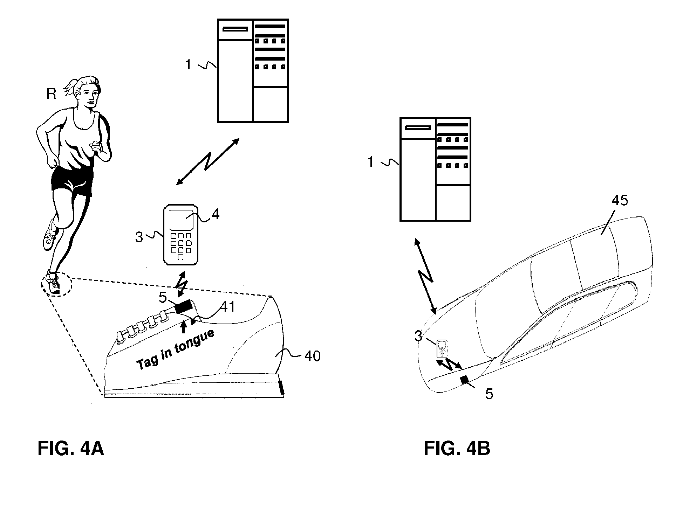

FIGS. 4A and 4B are illustrations of practical applications of the method disclosed herein.

In FIG. 4A, a tag 5 containing an information page identifier and a verification code is integrated in a shoe 40 of female runner R. The tag 5 is preferably integrated in the tongue of the shoe 40, as shown in FIG. 4A. Alternatively, the tag 5 may be integrated in the laces of the shoe 40. The shoe 40 has a marker 41 indicating the presence and/or location of the tag 5 in the shoe.

Runner R has created an information page with medical information in server system 1 under the same information page identifier as stored in tag 5. Furthermore, the verification code stored in server system 1 in association with the information page identifier is made to match the verification code in the tag 5. Therefore, someone (e.g. a doctor) holding his mobile device 3 close to the tag 5 may access the information page of runner R, e.g. displaying a web page on display 4.

Similarly, in FIG. 4B, a tag 5 is integrated in a car 45. Server system 1 stores information about the service and maintenance status of the car 45. If the car breaks down along the road, a service provider may easily get the car status from the server system reading tag 5 with his mobile device 3 displaying the car status in a web page in the same manner.

In both applications the acquirer of the information needs to be in close proximity of the tag to be able to receive the information. People trying to access the information from a remote location, e.g. using a personal computer, will not be able to access the information, even if the information page identifier would be known, because the verification code will not be known.

FIG. 5 depicts a method illustrating another embodiment of the invention. The embodiment enables displaying different content for a particular information page depending on the context.

Such a distinction in the information content of the information page may be desirable in many situations. One such situation involves presenting information to a patient in a healthcare institute (e.g. a hospital). This patient may possess a module, e.g. a card C, containing tag 5. Tag 5 comprises a second information page identifier and a second verification code, as described previously. The information page identified by the second information page identifier will be presented to the patient if the second verification code matches the pre-stored first verification code in the server system 1. The information, e.g. first information, shown on the information page may contain basic information, e.g. the last visit of the doctor, the expected next visit of the doctor, food consumed by the patient etc.

More or other information, here referred to as second information, may be available for the patient. The second information is different from the first information, but may contain the first information or a part thereof. However, it may have been decided that the second information requires the presence of a medical staff member, e.g. in order to explain the meaning of the further information to the patient. Other further options include enabling entering further information to the information page, e.g. for time registration purposes.

The method presented in FIG. 5 provides an embodiment enabling to present first content or second content on the information page shown on the device 3 dependent on the presence of the medical staff member.

In step S20, the medical staff member exposes a personal tag 5A having a storage 50A to a tag reader 34 running a web browser. Data from storage 50A, e.g. a card identifier, is transmitted to the server system 1 (which may be a local server system). Storage 50A may contain the address of the server system 1 in order to transmit the information to the correct server system 1. Furthermore, data is transmitted identifying the device 3 or tag reader 34.

In step S21, the server system 1 receives the transmission and generates an authorization status (e.g. an authorization token) for the tag reader 34 (or a device 3 containing the tag reader 34) in the server system 1 on the basis of the data identifying the device or tag reader (and possibly other data).

In step S22, which is an optional step, an information page may be transmitted or presented to the device 3. The decision whether or not to transmit or present the information page may, optionally, be dependent on a verification code match as described above. The information page may contain a confirmation page that the authorization status has been generated and that the patient card C may now be scanned.

In step S23, the device 3 having tag reader 34 reads the tag 5 from the patient card C. Patient card C has stored the second information page identifier and the second verification code. This data is transmitted to the server system 1 in step S24 along with information relating to the device 3 and/or tag reader 34.

In step S25, it is determined in the server system 1 whether or not access should be provided to the information page identified by the second information page identifier on the basis of the match between a pre-stored first verification code and the received second verification code as described previously.

In step S26, the authorisation status (or the presence thereof; e.g. the presence of an authorisation token or flag) of the device 3 and/or tag reader 34 in the server system 1 is evaluated on the basis of the information relating to the device 3 and/or the tag reader 34 received in step S24 upon receiving the access request. The server system 1 recognizes the device 3/tag reader 34 on the basis of this information. Dependent on the outcome of the evaluation, the server system 1 determines whether the first information or the second information should be shown on the information page identified by the second information page identifier.

In step S27, either the first information or the second information is transmitted or presented to the device 3 in the information page. In the present example, the first information may be shown in the information page if no authorization exists for the device 3/ tag reader 34 or if the authorization status is not valid. The second information is shown if the authorization exists or is valid. It should be noted that at least one of the first information and the second information may be empty or comprise an announcement that no information is available or that the user is not authorized to access the information. Transmission or presentation of the first information page may also not occur in the absence of a (valid) authorization status.

It should be noted that the authorization status may be generated in the server system 1 on the basis of a variety of data from at least one of the device 3/ tag reader 34 and the personal tag 5A. Examples of such data include the IP address of the device 3, an identifier of a web browser running on the device 3, the card identifier carrying the personal tag 5, etc. Further data may be used as well, e.g. a session identifier of the session between the device 3 and the server system 1.

Rights as to which information may be shown on the information page may be determined by data stored in the personal tag 5A (e.g. the card identifier) and/or by the device used to read the personal tag 5A. The server system 1 has stored the rights assigned to the tag 5A and/or the device 3.

The authorisation status may exist or be valid for a limited time period. In one embodiment, the server system 1 sets the duration of the time period. The duration of the time period may vary, dependent e.g. at least one of the time of the day, the card identifier, etc.

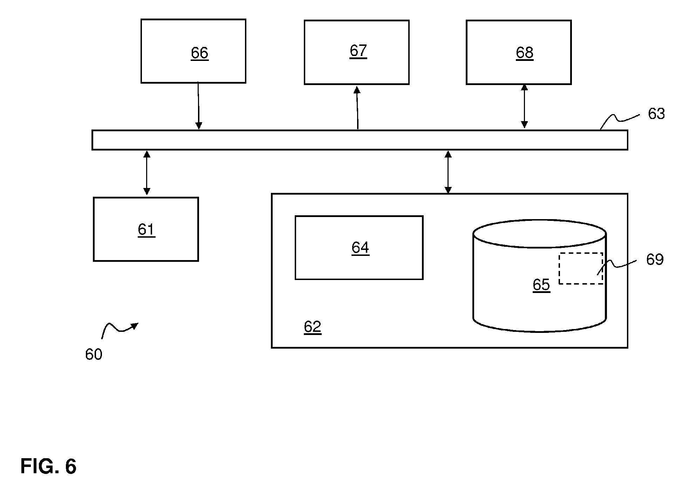

FIG. 6 is a block diagram illustrating an exemplary data processing system 60 for a server system 1 or a device 3 applied in embodiments of the invention.

Data processing system 60 may include at least one processor 61 coupled to memory elements 62 through a system bus 63. As such, the data processing system 60 may store program code within memory elements 62. Further, processor 61 may execute the program code accessed from memory elements 62 via system bus 63. In one aspect, data processing system 60 may be implemented as a computer that is suitable for storing and/or executing program code. It should be appreciated, however, that data processing system 60 may be implemented in the form of any system including a processor and memory that is capable of performing the functions described within this specification. Memory elements 62 may include one or more physical memory devices such as, for example, local memory 64 and one or more bulk storage devices 65. Local memory may refer to random access memory or other non-persistent memory device(s) generally used during actual execution of the program code. A bulk storage device 65 may be implemented as a hard drive or other persistent data storage device. The data processing system 60 may also include one or more cache memories (not shown) that provide temporary storage of at least some program code in order to reduce the number of times program code must be retrieved from bulk storage device 65 during execution.

Input/output (I/O) devices depicted as input device 66 and output device 67 optionally can be coupled to the data processing system 60. Examples of input devices may include, but are not limited to, for example, a keyboard, a pointing device such as a mouse, a touchscreen, or the like. Examples of output device may include, but are not limited to, for example, a monitor or display, speakers, or the like. Input device 66 and/or output device 67 may be coupled to data processing system 60 either directly or through intervening I/O controllers. A network adapter 68 may also be coupled to data processing system 60 to enable it to become coupled to other systems, computer systems, remote network devices, and/or remote storage devices through intervening private or public networks. The network adapter 68 may comprise a data receiver for receiving data that is transmitted by said systems, devices and/or networks to said data processing system 60 and a data transmitter for transmitting data to said systems, devices and/or networks.

Modems, cable modems, and Ethernet cards are examples of different types of network adapters that may be used with data processing system 60.

As pictured in FIG. 6, memory elements 62 may store an application 69. It should be appreciated that data processing system 60 may further execute an operating system (not shown) that can facilitate execution of the application. Applications, being implemented in the form of executable program code, can be executed by data processing system 60, e.g., by processor 61. Responsive to executing the application 69, the data processing system 60 may be configured to perform one or more operation as disclosed in the present application in further detail.

In one aspect, for example, data processing system 60 may represent a device 3 containing a tag reader 34. In that case, application 69 may represent a client application (e.g. a web browser) that, when executed, configures data processing system 60 to perform the various functions described herein with reference to a device 3. The user device can include, but is not limited to, a portable electronic device, e.g. a portable computer, a mobile phone, or the like.

In another aspect, data processing system 60 may represent a server system 1, in which case application 69, when executed, may configure data processing system 60 to perform operations as described in the present disclosure.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results. The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

## Claims

1. A computer-implemented method for controlling access to an information page for a tag reader, the information page being associated with a tag and being identified by a first information page identifier for accessing the information page via a server system, the server system having a pre-stored first verification code associated with the first information page identifier, the tag having stored a second information page identifier and a second verification code, the method comprising the steps in the server system of:
- receiving a request for the information page from the tag reader reading the tag, the request containing the second information page identifier and the second verification code;
- verifying whether the second verification code from the tag matches the first verification code pre-stored in the server system;
- when the second information page identifier from the tag matches the first page identifier, providing access, e.g. for the tag reader, to the information page identified by the first page identifier only when the second verification code matches the first verification code associated with the first page identifier.

2. The method according to claim 1, wherein the server system stores an authorisation status associated with the tag reader or a device comprising the tag reader and wherein the content of the information page identified by the second information page identifier is determined by the authorisation status stored in the server system.

3. The method according to claim 2, wherein the authorisation status is generated in the server system based on at least information received from the tag reader or the device.

4. The method according to one or more of the preceding claims, wherein the server system transmits or provides access to a web page to the tag reader containing the information page.

5. A method for accessing an information page associated with a tag from a server system using a tag reader, the server system having a pre-stored first verification code associated with a first information page identifier for accessing the information page, the method comprising the steps of:
- reading from the tag a second information page identifier and a second verification code stored in the tag;
- transmitting the read second information page identifier and second verification code to the server system;
- accessing the information page identified by the first page identifier when the second information page identifier matches the first page identifier only when the second verification code matches the first verification code associated with the first page identifier.

6. The method according to claim 5, further comprising the steps of:
- transmitting data of at least one of the tag reader or a device containing the tag reader to the server system to derive an authorization status for the tag reader or the device in the server system;
- accessing the information page, wherein the information page contains content dependent on the authorisation status in the server system.

7. The method according to one or more of the preceding claims, wherein the tag reader comprises a near-field communication (NFC) reader and the tag comprises an NFC tag.

8. A computer program containing software code portions configured, when executed on a server system, performing the steps of one or more of the claims 1-7.

9. A server system configured for controlling access to an information page for a tag reader, the information page being associated with a tag and being identified by a first page identifier for accessing the information page via the server system, wherein the server system comprises:
- a storage storing a first verification code in association with the first information page identifier;
- processing means for controlling access to the information page associated with the tag, the tag having stored a second information page identifier and a second verification code, wherein the processing means is configured for:
- processing a request for the information page from the tag reader reading the tag, the request containing the second information page identifier and the second verification code;
- verifying whether the second verification code from the tag matches the first verification code pre-stored in the server system;
- when the second information page identifier from the tag matches the first page identifier, providing access, e.g. for the tag reader, to the information page identified by the first page identifier only when the second verification code matches the first verification code associated with the first page identifier.

10. The server system according to claim 9, wherein the server system is configured to store an authorisation status associated with the tag reader or a device comprising the tag reader and wherein the processing means is further configured for determining content for the information page identified by the second information page identifier in dependence on the stored authorisation status.

11. The server system according to claim 10, wherein the processing means is configured to generate the authorisation status based on at least information received from the tag reader or the device.

12. The server system according to one or more of the claims 9-11, wherein the server system is further configured for transmitting or providing access to a web page containing the information page.

13. The server system according to one or more of the claims 9-12, wherein the processing means is further configured for blocking access to the information page after one or more erroneous verifications resulting from verifying a mismatch between the second verification code and the first verification code.

14. The server system according to one or more of the preceding claims 9-13, wherein the processing means is further configured for providing access to the information page only after an additional verification of login information from a user operating the tag reader.

15. An object containing a tag, wherein the tag comprises a page identifier configured for accessing an information page on a computer system and a verification code configured for enabling access control to the information page on the computer system.
